# EUROPÄISCHE PATENTSCHRIFT

(11) **EP 2 917 159 B1**
(45) Veröffentlichungstag und Bekanntmachung des Hinweises auf die Patenterteilung: **21.11.2018**
(21) Anmeldenummer: 13779534.0
(22) Anmeldetag: 08.10.2013
(51) Int. Cl.: C03C 17/22, C03C 17/23, E06B 3/67, B32B 17/10

(54) **VERGLASUNG MIT SCHALTBAREN OPTISCHEN EIGENSCHAFTEN**
GLAZING WITH SWITCHABLE OPTICAL PROPERTIES
VITRAGE DOTÉ DE PROPRIÉTÉS OPTIQUES COMMUTABLES

(30) Priorität: 08.11.2012 EP 12191780
(43) Veröffentlichungstag der Anmeldung: 16.09.2015
(73) Patentinhaber: Saint-Gobain Glass France, 92400 Courbevoie (FR)
(72) Erfinder: ORILLARD, Julien, 3008 Bern (DE); SELLES, Olivier, F-75018 Paris (FR)
(74) Vertreter: Gebauer, Dieter Edmund
(86) Internationale Anmeldenummer: PCT/EP2013/070870
(87) Internationale Veröffentlichungsnummer: WO 2014/072138

(56) Entgegenhaltungen:
- EP-A1- 0 521 602
- EP-A1- 0 573 325
- EP-A1- 0 825 478
- DE-A1- 4 422 830
- DE-A1- 19 616 841
- DE-U1-202004 018 979
- FR-A1- 2 961 609

## Beschreibung

Die Erfindung betrifft eine Verglasung mit schaltbaren optischen Eigenschaften, ein Verfahren zu deren Herstellung und deren Verwendung.

Es sind Verglasungen bekannt, die eine funktionelle Schicht enthalten, mittels derer die optischen Eigenschaften der Verglasung verändert werden können. Ein Beispiel hierfür sind elektrochrome Verglasungen, die eine elektrochemisch aktive Schicht zwischen zwei transparenten Flächenelektroden enthalten. Die Transmissionseigenschaften der aktiven Schicht können durch die an die Flächenelektroden angelegte Spannung elektrisch geschaltet werden. Elektrochrome Verglasungen sind beispielsweise aus US 20120026573 A1 und WO 2012007334 A1 bekannt.

Verglasungen mit schaltbaren optischen Eigenschaften können beispielsweise als Fensterscheiben von Gebäuden verwendet werden. Der Schaltzustand solcher Verglasungen beeinflusst allerdings den Farbeindruck des in die äußere Umgebung reflektierten Lichts. Befinden sich mehrere schaltbare Fensterscheiben in unterschiedlichen Schaltzuständen, so führt dies zu einem uneinheitlichen und daher wenig ästhetischen Erscheinungsbild des Gebäudes.

Aus EP 0645352 B1 ist eine Beschichtung bekannt, mittels derer ein einheitliches Erscheinungsbild einer Verglasung gewährleistet wird. Die Beschichtung, deren Hauptaufgabe die Reflexion von Wärmestrahlung ist, besteht aus einem Aufbau verschiedener Einzelschichten, wodurch aufwendige und kostenintensive Herstellungsverfahren notwendig sind. Aus US 6746775 B1 ist eine elektrisch schaltbare Verglasung bekannt mit einer Antireflexionsbeschichtung, durch die der Farbeindruck der Verglasung angepasst werden kann. Eine solche Antireflexionsbeschichtung kann jedoch in Abhängigkeit vom Betrachtungswinkel zu unterschiedlichen Farbeindrücken führen, was aus ästhetischen Gründen häufig nicht erwünscht ist.

Die Aufgabe der vorliegenden Erfindung ist es, eine verbesserte Verglasung mit schaltbaren optischen Eigenschaften bereitzustellen. Die Verglasung soll einfach und kostengünstig herstellbar sein und einen vom Schaltzustand und vom Betrachtungswinkel unabhängigen Farbeindruck des in die äußere Umgebung reflektierten Lichts aufweisen.

Die Aufgabe der vorliegenden Erfindung wird erfindungsgemäß durch eine Verglasung mit schaltbaren optischen Eigenschaften gemäß dem unabhängigen Anspruch 1 gelöst. Bevorzugte Ausführungen gehen aus den Unteransprüchen hervor.

Die erfindungsgemäße Verglasung mit schaltbaren optischen Eigenschaften umfasst zumindest die folgenden Merkmale:
- ein transparentes Substrat mit einer Außenfläche und einer Innenfläche,
- eine Reflexionsschicht auf der Außenfläche und / oder auf der Innenfläche des Substrats und
- ein schaltbares Funktionselement innenraumseitig zur Reflexionsschicht angeordnet, wobei die Reflexionsschicht ein Material mit einem Brechungsindex *n_{R}* von 1,6 bis 2,55 enthält und wobei das Produkt aus dem Brechungsindex *n_{R}* und der Dicke d der Reflexionsschicht von 250 nm bis 960 nm beträgt.

Die Reflexionsschicht ist im Sinne der Erfindung eine einzelne und homogene Schicht. Die Reflexionsschicht ist insbesondere kein Schichtaufbau aus mehreren Einzelschichten.

Die erfindungsgemäße Verglasung ist dafür vorgesehen, in einer Öffnung, beispielsweise eines Fahrzeugs oder eines Gebäudes, den Innenraum gegenüber der äußeren Umgebung abzutrennen. Mit Außenfläche wird im Sinne der Erfindung diejenige Oberfläche des Substrats bezeichnet, die in Einbaulage der Verglasung der äußeren Umgebung zugewandt ist. Mit Innenfläche wird im Sinne der Erfindung diejenige Oberfläche des Substrats bezeichnet, die in Einbaulage der Verglasung dem Innenraum zugewandt ist.

Die angegebenen Werte für den Brechungsindex *n_{R}* sind bei einer Wellenlänge von 550 nm gemessen.

Enthält ein Element zumindest ein Material, so schließt dies im Sinne der Erfindung den Fall ein, dass das Element aus dem Material besteht.

Unter einer Verglasung mit schaltbaren optischen Eigenschaften wird im Sinne der Erfindung nicht nur eine Verglasung bezeichnet, deren optische Eigenschaften, beispielsweise die Transmission von sichtbarem Licht, zwischen zwei diskreten Zuständen geschaltet werden können, beispielsweise einem opaken und einem transparenten Zustand. Es sind darunter auch solche Verglasungen zu verstehen, deren optische Eigenschaften stufenlos regelbar sind.

Das schaltbare Funktionselement ist erfindungsgemäß innenraumseitig der Reflexionsschicht angeordnet. Das bedeutet, dass das Funktionselement einen geringeren Abstand zum Innenraum aufweist als die Reflexionsschicht. Von der äußeren Umgebung durch die Verglasung tretendes Licht trifft also zunächst auf die Reflexionsbeschichtung und anschließend auf das Funktionselement. Durch die erfindungsgemäße Reflexionsschicht kann der Farbeindruck des zur äußeren Umgebung reflektierten Lichts, der im Sinne der Erfindung auch als außenseitige Reflexionsfarbe bezeichnet wird, beeinflusst werden. Durch den Brechungsindex *n_{R}* und die Dicke d kann die außenseitige Reflexionsfarbe gezielt eingestellt werden. Die Reflexionsschicht führt dazu, dass der Schaltzustand des Funktionselementes von außen nicht erkannt werden kann. Eine Gebäudefassade mit mehreren erfindungsgemäßen Verglasungen weist also stets ein einheitliches Erscheinungsbild unabhängig vom Schaltzustand der einzelnen Verglasungen auf. Die außenseitige Reflexionsfarbe ist zudem unabhängig vom Betrachtungswinkel, so dass sich das Erscheinungsbild beispielsweise für einen an dem Gebäude vorbeifahrenden Betrachter nicht ändert. Die Reflexionsschicht umfasst zudem nur eine einzelne Schicht, wodurch die Verglasung einfach und kostengünstig herstellbar ist. Das sind große Vorteile der Erfindung.

Es können auch mehrere schaltbare Funktionselemente innenraumseitig der Reflexionsbeschichtung angeordnet sein. Natürlich kann die Verglasung auch mehr als eine erfindungsgemäße Reflexionsschicht aufweisen, wobei das Funktionselement innenraumseitig zumindest einer Reflexionsschicht angeordnet sein muss.

Der Berechungsindex *n_{R}* des Materials der Reflexionsschicht beträgt erfindungsgemäß von 1,6 bis 2,55. Der Brechungsindex beträgt bevorzugt von 1,9 bis 2,3. Damit werden besonders gute Ergebnisse erreicht.

Die Reflexionsschicht kann porös sein. Durch eine geeignet gewählt Porosität kann der Brechungsindex des Materials der Reflexionsschicht vorteilhaft beeinflusst werden.

Die Reflexionsschicht kann vollflächig auf die Oberfläche des Substrats aufgebracht sein. Das ist besonders vorteilhaft im Hinblick auf eine einheitliche außenseitige Reflexionsfarbe. Das Substrat kann aber beispielsweise auch einen beschichtungsfreien Randbereich aufweisen, insbesondere, wenn dieser beschichtungsfreie Randbereich in Einbaulage verdeckt ist, beispielsweise durch Rahmen oder Befestigungselemente.

Die Reflexionsschicht enthält bevorzugt zumindest Siliziumnitrid, Zinnoxid, Siliziumoxynitrid, Zinkoxid, Zirkoniumoxid, Aluminiumnitrid, Indium-Zinn-Oxid, Zinn-Zink-Oxid, Titan-Zink-Oxid und / oder Titan-Silizium-Oxid. Die Reflexionsschicht enthält besonders bevorzugt Siliziumnitrid. Das ist besonders vorteilhaft im Hinblick auf die Stabilität und das Aufbringen der Reflexionsschicht und die Regulierung der außenseitigen Reflexionsfarbe.

In einer bevorzugten Ausgestaltung der Erfindung weist das zur äußeren Umgebung reflektierte Licht einen grünen Farbeindruck auf. Ein grüner Farbeindruck wird erreicht, wenn das Produkt aus dem Brechungsindex *n_{R}* und der Dicke d der Reflexionsschicht von 365 nm bis 400 nm, bevorzugt von 375 nm bis 390 nm, insbesondere etwa 385 nm beträgt. Ein grüner Farbeindruck wird alternativ erreicht, wenn das Produkt aus dem Brechungsindex *n_{R}* und der Dicke d der Reflexionsschicht von 730 nm bis 800 nm, bevorzugt von 750 nm bis 780 nm, insbesondere etwa 770 nm beträgt.

In einer alternativen bevorzugten Ausgestaltung der Erfindung weist das zur äußeren Umgebung reflektierte Licht einen goldenen Farbeindruck auf. Ein goldener Farbeindruck wird erreicht, wenn das Produkt aus dem Brechungsindex *n_{R}* und der Dicke d der Reflexionsschicht von 435 nm bis 480 nm, bevorzugt von 440 nm bis 475 nm, insbesondere etwa 450 nm beträgt. Ein goldener Farbeindruck wird alternativ erreicht, wenn das Produkt aus dem Brechungsindex *n_{R}* und der Dicke *d* der Reflexionsschicht von 870 nm bis 960 nm, bevorzugt von 880 nm bis 950 nm, insbesondere etwa 900 nm beträgt.

In einer alternativen bevorzugten Ausgestaltung der Erfindung weist das zur äußeren Umgebung reflektierte Licht einen blauen Farbeindruck auf. Ein blauer Farbeindruck wird erreicht, wenn das Produkt aus dem Brechungsindex *n_{R}* und der Dicke d der Reflexionsschicht von 305 nm bis 365 nm, bevorzugt von 320 nm bis 345 nm, insbesondere etwa 330 nm beträgt. Ein blauer Farbeindruck wird alternativ erreicht, wenn das Produkt aus dem Brechungsindex *n_{R}* und der Dicke d der Reflexionsschicht von 610 nm bis 730 nm, bevorzugt von 640 nm bis 690 nm, insbesondere etwa 660 nm beträgt.

In einer alternativen bevorzugten Ausgestaltung der Erfindung weist das zur äußeren Umgebung reflektierte Licht einen violetten Farbeindruck auf. Ein violetter Farbeindruck wird erreicht, wenn das Produkt aus dem Brechungsindex *n_{R}* und der Dicke d der Reflexionsschicht von 250 nm bis 300 nm, bevorzugt von 270 nm bis 285 nm, insbesondere etwa 280 nm beträgt. Ein violetter Farbeindruck wird alternativ erreicht, wenn das Produkt aus dem Brechungsindex *n_{R}* und der Dicke *d* der Reflexionsschicht von 500 nm bis 600 nm, bevorzugt von 540 nm bis 570 nm, insbesondere etwa 560 nm beträgt.

Die Reflexionsschicht ist bevorzugt direkt auf eine Oberfläche des Substrats aufgebracht. Außer der Reflexionsschicht sind bevorzugt keine weitere Schichten oberhalb oder unterhalb der Reflexionsschicht auf das Substrat aufgebracht. Das ist besonders vorteilhaft im Hinblick auf eine einfache und kostengünstige Herstellung der Verglasung. Alternativ kann aber auch zumindest eine weitere Schicht zwischen dem Substrat und der Reflexionsschicht angeordnet sein, beispielsweise eine haftvermittelnde Schicht oder eine Barriereschicht. Auf der vom Substrat abgewandten Oberfläche der Reflexionsschicht kann auch zumindest eine weitere Schicht angeordnet sein, beispielsweise eine Schutzschicht gegen Beschädigungen der Reflexionschicht.

Das Funktionselement umfasst zumindest eine funktionelle Schicht, welche die schaltbaren optischen Eigenschaften aufweist. Ist die funktionelle Schicht elektrisch schaltbar, so ist die funktionelle Schicht typischerweise zwischen einer ersten und einer zweiten transparenten Flächenelektrode angeordnet. Die Flächenelektroden und die funktionelle Schicht sind typischerweise parallel zur Oberfläche des Substrats angeordnet. Die Flächenelektroden sind mit einer externen Spannungsquelle elektrisch verbunden.

In einer Ausgestaltung der Erfindung ist die funktionelle Schicht des Funktionselements eine elektrochemisch aktive Schicht. Solche Funktionselemente sind als elektrochrome Funktionselemente bekannt. Die Transmission von sichtbarem Licht ist vom Einlagerungsgrad von Ionen in die funktionelle Schicht abhängig, wobei die Ionen beispielsweise durch eine lonenspeicherschicht zwischen funktioneller Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

In einer Ausgestaltung der Erfindung enthält die funktionelle Schicht des Funktionselements Flüssigkristalle, welche beispielsweise in eine Polymermatrix eingelagert sind. Solche Funktionselemente sind als PDLC-Funktionselemente (Polymer dispersed liquid crystal) bekannt. Wird an die Flächenelektroden keine Spannung angelegt, so sind die Flüssigkristalle ungeordnet ausgerichtet, was zu einer starken Streuung des durch die funktionelle Schicht tretenden Lichts führt. Wird an die Flächenelektroden eine Spannung angelegt, so richten sich die Flüssigkristalle in einer gemeinsamen Richtung aus und die Transmission von Licht durch die funktionelle Schicht wird erhöht. Ein solches Funktionselement ist beispielsweise aus DE 102008026339 A1 bekannt.

In einer Ausgestaltung der Erfindung enthält die funktionelle Schicht des Funktionselements suspendierte Partikel, wobei die Absorption von Licht durch die funktionelle Schicht mittels Anlegen einer Spannung an die Flächenelektroden veränderbar ist. Solche Funktionelemente sind als SPD-Funktionselemente (suspended particle device) bekannt, beispielsweise aus WO 2011033313 A1.

Die Erfindung ist jedoch nicht auf elektrisch schaltbare Funktionselemente beschränkt. In einer Ausgestaltung der Erfindung ist das Funktionselement thermisch schaltbar. Solche Funktionselemente umfassen zumindest eine funktionelle Schicht, welche ein thermochromes Material enthält, beispielsweise Vanadiumoxid. Das thermochrome Material kann beispielsweise auf eine Scheibe aufgebracht sein oder auch beispielsweise in eine polymere Schicht eingelagert sein. Aufgrund von Veränderungen der Kristallstruktur gehen thermochrome Materialen bei Überschreiten einer Übergangstemperatur vom elektrisch isolierenden in einen elektrisch leitenden Zustand über und ändern dabei ihre optischen Eigenschaften, beispielsweise den Reflexionsgrad gegenüber Infrarot-Strahlung und / oder ihre Farbe. Thermochrome Funktionselemente sind beispielsweise aus US 2005147825 A1 und US6084702A bekannt.

Das erfindungsgemäße Funktionselement kann auch auf Grundlage anderer, an sich bekannter Prinzipien schaltbar hinsichtlich der optischen Eigenschaften sein. Das Funktionselement kann beispielsweise auch ein gasochromes, ein photochromes, ein photoelektrochromes oder ein thermotropes Funktionselement sein.

Den Ausgestaltungen des Funktionselementes ist gemeinsam, dass der Schaltzustand anhand der Farbe der außenseitigen Reflexion von einem Betrachter in der äußeren Umgebung erkannt werden kann. Dieser meist unerwünschte Effekt wird durch die erfindungsgemäße Reflexionsschicht vorteilhaft verhindert.

Das schaltbare Funktionselement kann natürlich außer der funktionellen Schicht (und im Falle einer elektrisch schaltbaren funktionellen Schicht den Flächenelektroden) weitere an sich bekannte Schichten aufweisen, beispielsweise Barriereschichten, Blockerschichten, Antireflexionsschichten, Schutzschichten und / oder Glättungsschichten.

Die Reflexionsschicht ist erfindungsgemäß auf einer Oberfläche des Substrats aufgebracht, während das Funktionselement innerhalb der erfindungsgemäßen Verglasung innenraumseitig der Reflexionsschicht angeordnet ist. In einer Ausgestaltung der Erfindung ist die Reflexionsschicht auf der Außenfläche des Substrats und das Funktionselement auf der Innenfläche des Substrats angeordnet. Das Substrat kann dabei Teil einer Scheibenanordnung sein. Das Substrat kann beispielsweise über die Innenfläche oder über die Außenfläche mit zumindest einer weiteren Scheibe mittels einer thermoplastischen Zwischenschicht zu einer Verbundscheibe verbunden sein. Das Substrat kann auch beispielsweise über die Innenfläche oder die Außenfläche mit zumindest einer weiteren Scheibe mittels zumindest eines Abstandshalters zu einer Isolierverglasung verbunden sein. Das Substrat kann natürlich auch Teil einer Scheibenanordnung aus mehr als zwei Einzelscheiben sein.

In einer weiteren Ausgestaltung der Erfindung ist das Substrat über seine Innenfläche mittels zumindest einer thermoplastischen Zwischenschicht mit einer transparenten Deckscheibe verbunden. Das Substrat ist dabei in Einbaulage der Verglasung der äußeren Umgebung zugewandt, während die Deckscheibe dem Innenraum zugewandt ist. Die Deckscheibe weist eine Außenfläche und eine Innenfläche auf, wobei die Außenfläche dem Substrat und wobei die Innenfläche dem Innenraum zugewandt ist. Die Reflexionsbeschichtung ist auf der Innenfläche oder auf der Außenfläche des Substrats angeordnet. Das Funktionselement ist auf der Innenfläche oder der Außenfläche der Deckscheibe angeordnet. Das Funktionselement ist alternativ in der thermoplastischen Zwischenschicht angeordnet, beispielsweise zwischen einer ersten und einer zweiten thermoplastischen Folie. Die Verbundscheibe, umfassend das Substrat, die thermoplastische Zwischenschicht und die Deckscheibe, kann auch über die Außenfläche des Substrats und / oder über die Innenfläche der Deckscheibe mit zumindest einer weiteren Scheibe verbunden sein, beispielsweise über zumindest eine weitere thermoplastische Zwischenschicht und / oder Abstandshalter.

In einer weiteren Ausgestaltung der Erfindung ist das Substrat über seine Innenfläche mittels zumindest eines Abstandshalters mit einer transparenten Deckscheibe zu einer Isolierverglasung verbunden. Das Substrat ist dabei in Einbaulage der Verglasung der äußeren Umgebung zugewandt, während die Deckscheibe dem Innenraum zugewandt ist. Die Deckscheibe weist eine Außenfläche und eine Innenfläche auf, wobei die Außenfläche dem Substrat und wobei die Innenfläche dem Innenraum zugewandt ist. Die Reflexionsbeschichtung ist auf der Innenfläche oder auf der Außenfläche des Substrats angeordnet. Das Funktionselement ist auf der Innenfläche oder auf der Außenfläche der Deckscheibe angeordnet. Das Substrat und / oder die Deckscheibe innerhalb der Isolierverglasung kann auch Teil einer Verbundscheibe sein. Es kann auch zumindest eine weitere Scheibe über Abstandshalten mit der Außenfläche des Substrats und / oder der Innenfläche der Deckscheibe verbunden sein.

Das Funktionselement kann auch auf einer Oberfläche einer Deckscheibe angeordnet sein, wobei zwischen dem Substrat und der Deckscheibe zumindest eine weitere Scheibe angeordnet ist. Die weitere Scheibe kann mit dem Substrat über eine thermoplastische Zwischenschicht oder zumindest einen Abstandshalter verbunden ist und mit der Deckscheibe über eine Zwischenschicht oder zumindest einen Abstandshalter verbunden sein.

In einer weiteren Ausgestaltung der Erfindung ist das Substrat über seine Innenfläche mit einer transparenten Deckscheibe verbunden. Das Substrat ist dabei in Einbaulage der Verglasung der äußeren Umgebung zugewandt, während die Deckscheibe dem Innenraum zugewandt ist. Die Deckscheibe weist eine Außenfläche und eine Innenfläche auf, wobei die Außenfläche dem Substrat und wobei die Innenfläche dem Innenraum zugewandt ist. Die Reflexionsbeschichtung ist auf der Innenfläche oder auf der Außenfläche des Substrats angeordnet. Das Funktionselement ist auf der Innenfläche des Substrats (gegebenenfalls über die Reflexionsbeschichtung) und auf der Außenfläche der Deckscheibe angeordnet, so dass das Substrat und die Deckscheibe über das Funktionselement miteinander verbunden sind.

Das Substrat enthält bevorzugt nichtvorgespanntes, teilvorgespanntes oder vorgespanntes Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon.

In einer vorteilhaften Ausgestaltung weist das Substrat einen Brechungsindex von 1,45 bis 1,55 auf. Das Substrat enthält besonders bevorzugt Kalk-Natron-Glas. Der Brechungsindex von Kalk-Natron-Glas beträgt etwa 1,52.

Umfasst die Verglasung eine erfindungsgemäße Deckscheibe und / oder zumindest eine weitere Scheibe, so enthält die Deckscheibe und / oder die weitere Scheibe bevorzugt nichtvorgespanntes, teilvorgespanntes oder vorgespanntes Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon.

Die Dicke des Substrats und gegebenenfalls der Deckscheibe kann breit variieren und so den Erfordernissen im Einzelfall angepasst werden. Das Substrat und gegebenenfalls die Deckscheibe weisen bevorzugt Dicken von 20 µm bis 10 mm auf, beispielsweise von 0,5 mm bis 10mm. Das Substrat und/oder die Deckscheibe können aber auch sehr geringe Dicken aufweisen, beispielsweise von 20 µm bis 100 µm. Die Fläche der erfindungsgemäßen Verglasung kann breit variieren, beispielsweise von 100 cm² bis 20 m². Bevorzugt weist die Verglasung eine Fläche von 400 cm² bis 6 m² auf, wie sie für Verglasungen von Fahrzeugen und von Bau- und Architekturverglasungen üblich sind.

Das Substrat und gegebenenfalls die Deckscheibe und / oder weitere Scheiben können eine beliebige dreidimensionale Form aufweisen. Das Substrat und gegebenenfalls die Deckscheibe und / oder weitere Scheiben sind bevorzugt plan oder leicht oder stark in einer Richtung oder in mehreren Richtungen des Raumes gebogen.

Umfasst die erfindungsgemäße Verglasung eine thermoplastische Zwischenschicht, über die beispielsweise das Substrat mit einer Deckscheibe verbunden ist, so enthält die thermoplastische Zwischenschicht bevorzugt thermoplastische Kunststoffe, wie Polyvinylbutyral (PVB) und / oder Ethylenvinylacetat (EVA). Die Zwischenschicht kann auch Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, Fluorinierte Ethylen-Propylene, Polyvinylfluorid, Ethylen-Tetrafluorethylen, Copolymere und / oder Gemische davon enthalten. Die thermoplastische Zwischenschicht kann durch eine oder mehrere thermoplastische Folien ausgebildet werden, wobei die Dicke einer Folie bevorzugt von 0,3 mm bis 3 mm beträgt.

Das Substrat, gegebenenfalls die Deckscheibe und gegebenenfalls die weiteren Scheiben der Verglasung können geeignete, an sich bekannte Beschichtungen aufweisen, beispielsweise Antireflexbeschichtungen, Antihaftbeschichtungen, Antikratzbeschictungen, photokatalytische Beschichtungen oder Wärmestrahlen reflektierende Beschichtungen (Low-E-Beschichtungen).

Die Aufgabe der Erfindung wird weiter durch ein Verfahren zur Herstellung einer erfindungsgemäßen Verglasung mit schaltbaren optischen Eigenschaften gelöst, wobei zumindest
- eine Reflexionsschicht auf die Außenfläche oder auf die Innenfläche eines transparenten Substrats aufgebracht wird,
- ein Funktionselement auf die Außenfläche oder auf die Innenfläche einer transparenten Deckscheibe aufgebracht oder in eine thermoplastische Zwischenschicht eingebracht wird und
- das Substrat über die thermoplastische Zwischenschicht mit der Deckscheibe unter Einwirkung von Hitze, Vakuum und / oder Druck verbunden wird.

Das Aufbringen der Reflexionsschicht auf das Substrat kann zeitlich vor, nach oder zeitgleich mit dem Aufbringen des Funktionselements auf die Deckscheibe beziehungsweise dem Einbringen des Funktionselements in die Zwischenschicht erfolgen. Das Substrat und die Deckscheibe werden beim Verbinden so angeordnet, dass die Innenfläche des Substrats und die Außenfläche der Deckscheibe einander zugewandt sind. Das Verbinden des Substrats mit der Deckscheibe erfolgt bevorzugt zeitlich nach dem Aufbringen beziehungsweise Einbringen von Reflexionsschicht und Funktionselement. Sollen die Reflexionsschicht und / oder das Funktionselement auf Oberflächen aufgebracht werden, welche nach dem Verbinden von Substrat und Deckscheibe noch zugänglich sind, wie beispielsweise die Außenfläche des Substrats oder die Innenfläche der Deckscheibe, so kann das Aufbringen der Reflexionsschicht und / oder des Funktionselementes natürlich auch zeitlich nach dem Verbinden von Substrat und Deckscheibe erfolgen.

Ist das Funktionselement ein elektrisch schaltbares Funktionselement, so erfolgt die elektrische Kontaktierung der Flächenelektroden bevorzugt vor dem Verbinden von Substrat und Deckscheibe.

Das Einbringen des Funktionselements in die thermoplastische Zwischenschicht umfasst bevorzugt das Einbringen des Funktionselements zwischen mindestens eine erste und mindestens eine zweite thermoplastische Folie.

Die Verbindung von Substrat und Deckscheibe erfolgt durch an sich bekannte Verfahren, beispielsweise durch Autoklavverfahren, Vakuumsackverfahren, Vakuumringverfahren, Kalanderverfahren, Vakuumlaminatoren oder durch Kombinationen davon.

Die Aufgabe der Erfindung wird weiter durch ein Verfahren zur Herstellung einer erfindungsgemäßen Verglasung mit schaltbaren optischen Eigenschaften gelöst, wobei zumindest
- eine Reflexionsschicht auf die Außenfläche oder auf die Innenfläche eines transparenten Substrats aufgebracht wird,
- ein Funktionselement auf die Außenfläche oder auf die Innenfläche einer transparenten Deckscheibe aufgebracht wird und
- das Substrat über mindestens einen Abstandshalter mit der Deckscheibe verbunden wird.

Das Aufbringen der Reflexionsschicht auf das Substrat kann zeitlich vor, nach oder zeitgleich mit dem Aufbringen des Funktionselements auf die Deckscheibe erfolgen. Das Substrat und die Deckscheibe werden beim Verbinden so angeordnet, dass die Innenfläche des Substrats und die Außenfläche der Deckscheibe einander zugewandt sind. Das Verbinden des Substrats mit der Deckscheibe erfolgt bevorzugt zeitlich nach dem Aufbringen beziehungsweise Einbringen von Reflexionsschicht und Funktionselement. Sollen die Reflexionsschicht und / oder das Funktionselement auf Oberflächen aufgebracht werden, welche nach dem Verbinden von Substrat und Deckscheibe noch zugänglich sind, wie beispielsweise die Außenfläche des Substrats oder die Innenfläche der Deckscheibe, so kann das Aufbringen der Reflexionsschicht und / oder des Funktionselementes natürlich auch zeitlich nach dem Verbinden von Substrat und Deckscheibe erfolgen.

Ist das Funktionselement ein elektrisch schaltbares Funktionselement, so erfolgt die elektrische Kontaktierung der Flächenelektroden bevorzugt vor dem Verbinden von Substrat und Deckscheibe.

Die Aufgabe der Erfindung wird weiter durch ein Verfahren zur Herstellung einer erfindungsgemäßen Verglasung mit schaltbaren optischen Eigenschaften gelöst, wobei zumindest
- ein Reflexionsschicht auf die Außenfläche eines transparenten Substrats aufgebracht wird und
- ein Funktionselement auf die Innenfläche des Substrats aufgebracht wird.

Das Aufbringen der Reflexionsschicht auf das Substrat kann zeitlich vor, nach oder zeitgleich mit dem Aufbringen des Funktionselements auf das Substrat erfolgen.

Das Substrat wird nach dem Aufbringen der Reflexionsschicht und des Funktionselementes bevorzugt mit zumindest einer weiteren Scheibe zu einer Isolierverglasung und / oder Verbundscheibe verbunden.

Die Reflexionsschicht in den erfindungsgemäßen Verfahren wird durch an sich bekannte Verfahren abgeschieden, bevorzugt durch magnetfeldunterstützte Kathodenzerstäubung. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Die Reflexionsschicht kann aber auch durch andere, dem Fachmann bekannte Verfahren aufgebracht werden, beispielsweise durch Aufdampfen oder chemische Gasphasenabscheidung (chemical vapour deposition, CVD), durch plasmagestützte Gasphasenabscheidung (PECVD) oder durch nasschemische Verfahren.

Die erfindungsgemäße Verglasung wird bevorzugt in Gebäuden, besonders bevorzugt als Fassadenverglasung oder in Fortbewegungsmitteln für den Verkehr auf dem Lande, in der Luft oder zu Wasser verwendet.

Die Erfindung umfasst außerdem die Verwendung einer erfindungsgemäßen Reflexionsschicht in einer erfindungsgemäßen Verglasung zur Regulierung der außenseitigen Reflexionsfarbe.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: einen Querschnitt durch eine erste Ausgestaltung der erfindungsgemäßen Verglasung mit schaltbaren optischen Eigenschaften,
- Fig. 2: einen Querschnitt durch eine weitere Ausgestaltung der erfindungsgemäßen Verglasung,
- Fig. 3: einen Querschnitt durch eine weitere Ausgestaltung der erfindungsgemäßen Verglasung,
- Fig. 4: einen Querschnitt durch eine weitere Ausgestaltung der erfindungsgemäßen Verglasung,
- Fig. 5: einen Querschnitt durch eine weitere Ausgestaltung der erfindungsgemäßen Verglasung,
- Fig. 6: einen Querschnitt durch eine weitere Ausgestaltung der erfindungsgemäßen Verglasung,
- Fig. 7: ein Ausführungsbeispiel des erfindungsgemäßen Verfahrens anhand eines Flussdiagramms und
- Fig. 8: ein weiteres Ausführungsbeispiel des erfindungsgemäßen Verfahrens anhand eines Flussdiagramms.

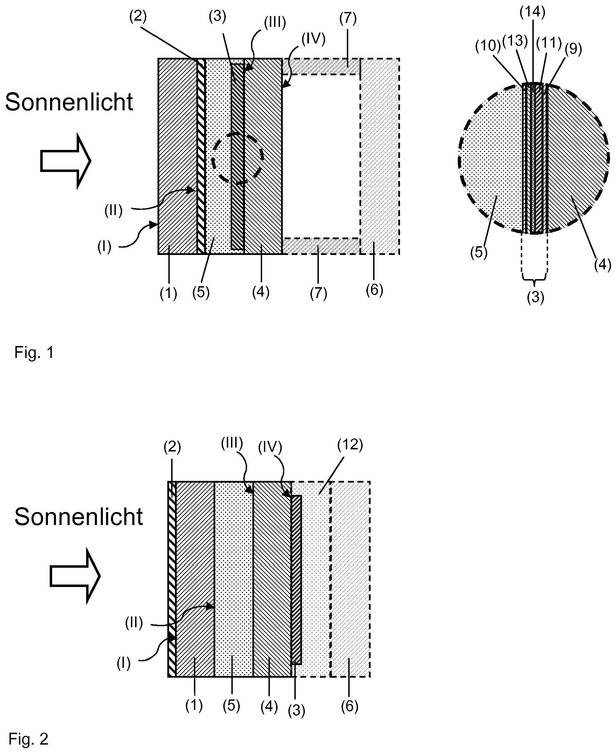

Fig. 1 zeigt einen Querschnitt durch eine Ausgestaltung der erfindungsgemäßen Verglasung mit schaltbaren optischen Eigenschaften. Die Verglasung umfasst ein Substrat 1, das über seine Innenfläche (II) mit der Außenfläche (III) einer Deckscheibe 4 mittels einer thermoplastischen Zwischenschicht 5 zu einer Verbundscheibe verbunden ist. Die Verglasung umfasst außerdem eine weitere Scheibe 6, die über einen Abstandshalter 7 mit der Innenfläche (IV) der Deckscheibe 4 zu einer Isolierverglasung verbunden ist. Die Verglasung ist als Verscheibung einer Gebäudefassade vorgesehen und in Einbaulage so angeordnet, dass die Außenfläche (I) des Substrats 1 der äußeren Umgebung und die weitere Scheibe 6 dem Innenraum zugewandt ist. Das Substrat 1, die Deckscheibe 4 und die weitere Scheibe 6 bestehen aus Kalk-Natron-Glas und weisen Dicken von 6 mm auf. Die thermoplastische Zwischenschicht 5 aus Polyvinylbutyral (PVB) weist eine Dicke von 0,76 mm auf. Der durch den umlaufenden Abstandshalter 7 festgelegte Abstand zwischen der Deckscheibe 4 und der weiteren Scheibe 6 beträgt 12 mm.

Auf der Innenfläche (II) des Substrats 1 ist eine Reflexionsschicht 2 aus Siliziumnitrid mit einer Dicke d von 190 nm angeordnet. Der Brechungsindex *n_{R}* des Siliziumnitrids beträgt 2,02. Das Produkt aus dem Brechungsindex *n_{R}* und der Dicke d der Reflexionsschicht 2 beträgt etwa 384 nm. Durch die Reflexionsschicht 2 wird in dieser Ausgestaltung eine grüne Farbe des in die äußere Umgebung reflektierten Lichtes erreicht.

Auf der Außenfläche (III) der Deckscheibe 4 ist ein Funktionselement 3 angeordnet. Das Funktionselement 3 weist in Einbaulage der Verglasung einen geringeren Abstand zum Innenraum als die Reflexionsschicht 2 auf. Das Funktionselement 3 ist daher im Sinne der Erfindung innenraumseitig der Reflexionsschicht 2 angeordnet. Das Funktionselement 3 ist ein elektrisch schaltbares, elektrochromes Funktionselement. Der durch den Kreis gekennzeichnete Bereich um das Funktionselement 3 ist rechts vergrößert dargestellt. Das Funktionselement 3 umfasst in der beispielhaften Ausgestaltung mit wachsendem Abstand von der Deckscheibe 4 eine erste Flächenelektrode 9 aus Fluor-dotiertem Zinnoxid, eine elektrochrome funktionelle Schicht 11 aus Lithium-dotiertem Wolframoxid, eine elektrolytische Schicht 14 aus Ta₂O₅, eine lonenspeicherschicht 13 aus Lithium-dotiertem CeO₂ und eine zweite Flächenelektrode 10 aus Indium-Zinn-Oxid (ITO). Die erste Flächenelektrode 9 und die zweite Flächenelektrode 10 sind über nicht dargestellte Leiter mit einer externen Spannungsversorgung verbunden. Die Transmission von sichtbarem Licht durch die funktionelle Schicht 11 ist vom Einlagerungsgrad von Lithium-Ionen abhängig und kann durch die an die Flächenelektroden 9, 10 angelegte Spannung geschaltet werden, weil in Abhängigkeit von der angelegten Spannung Lithium-Ionen zwischen der funktionellen Schicht 11 und der lonenspeicherschicht 13 durch die elektrolytische Schicht 14 hindurch wandern können.

Ohne die Reflexionsschicht 2 wäre der Schaltzustand des Funktionselements 3 für einen Betrachter in der äußeren Umgebung anhand der Farbe des reflektierten Lichtes zu erkennen. Im Falle von mehreren Verglasungen mit jeweils einem Funktionselement 3 an einer Gebäudefassade kann dies zu einem uneinheitlichen und daher wenig ästhetischen Farbeindruck der Fassade führen, wenn die einzelnen Funktionselemente 3 unterschiedliche Schaltzustände aufweisen. Durch die Reflexionsbeschichtung 2 wird eine einheitliche, vom Schaltzustand des Funktionselementes unabhängige außenseitige Reflexionsfarbe erreicht. Die Farbe, die durch den Brechungsindex *n_{R}* und die Dicke d der Reflexionsschicht 2 eingestellt werden kann, ist zudem unabhängig vom Betrachtungswinkel. Die Farbe weist daher für einen bewegten Beobachter keine Änderungen in Abhängigkeit von der Betrachtungsposition auf. Die Reflexionsschicht 2 umfasst zudem nur eine einzelne Schicht, so dass die Verglasung einfach und kostengünstig herzustellen ist. Das sind große Vorteile der Erfindung.

Fig. 2 zeigt einen Querschnitt durch eine weitere Ausgestaltung der erfindungsgemäßen Verglasung mit schaltbaren optischen Eigenschaften. Das Substrat 1 ist über seine Innenfläche (II) mittels einer thermoplastischen Zwischenschicht 5 mit der Außenfläche (III) einer Deckscheibe 4 verbunden. Die Innenfläche (IV) der Deckscheibe 4 ist über eine zweite thermoplastische Zwischenschicht 12 mit einer weiteren Scheibe 6 verbunden. Das Substrat 1, die Deckscheibe 4 und die thermoplastische Zwischenschicht 5 sind wie in Fig. 1 ausgestaltet. Die zweite thermoplastische Zwischenschicht 12 besteht aus PVB und weist eine Dicke von 0,76 mm auf.

Auf der Innenfläche (IV) der Deckscheibe 4 ist ein Funktionselement 3 angeordnet. Das Funktionselement 3 ist eine thermochrome Schicht aus dotiertem VO₂. Das Funktionselement 3 ist thermisch schaltbar: VO₂ wechselt bei Überschreiten einer Temperatur von etwa 68°C von einem halbleitenden Zustand mit hoher Transmission von sichtbarem Licht in einen leitenden Zustand mit verringerter Transmission von sichtbarem Licht. Die Temperatur des Übergangs zwischen den Schaltzuständen kann durch Dotierungen, beispielsweise Wolfram, vermindert werden, beispielsweise auf etwa 29°C.

Auf der Außenfläche (I) des Substrats 1 ist eine Reflexionsschicht 2 aus Zirkoniumoxid (ZrO₂) mit einer Dicke d von 200 nm angeordnet. Der Brechungsindex *n_{R}* des Zirkoniumoxids beträgt etwa 2,22. Das Produkt aus dem Brechungsindex *n_{R}* und der Dicke d der Reflexionsschicht 2 beträgt 444 nm. Durch die Reflexionsschicht 2 wird in dieser Ausgestaltung eine goldene Farbe des in die äußere Umgebung reflektierten Lichtes erreicht.

Das thermochrome Material kann alternativ auch beispielsweise in eine der thermoplastischen Zwischenschichten 5, 12 eingelagert sein, welche dann das schaltbare Funktionselement 3 bilden würde.

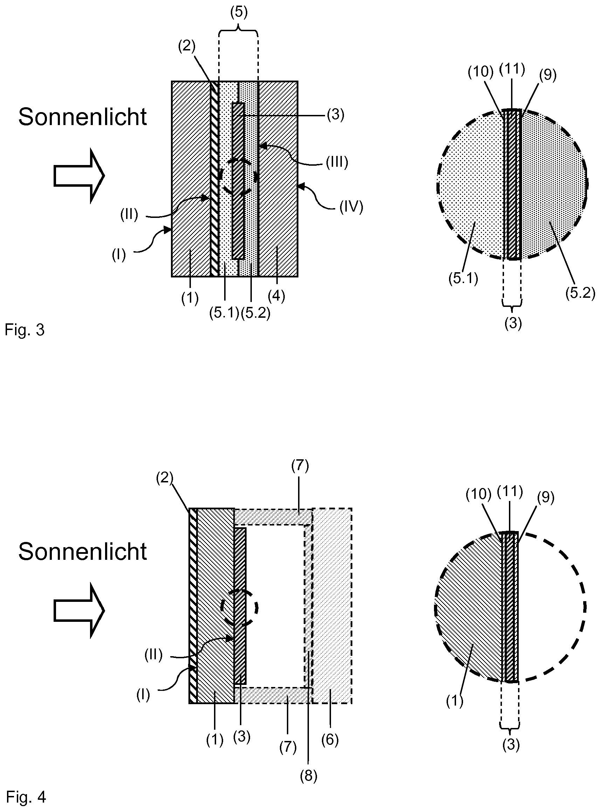

Fig. 3 zeigt einen Querschnitt durch eine weitere Ausgestaltung der erfindungsgemäßen Verglasung mit schaltbaren optischen Eigenschaften. Das Substrat 1 ist über seine Innenfläche (II) mittels einer thermoplastischen Zwischenschicht 5 mit der Außenfläche (III) einer Deckscheibe 4 verbunden. Das Substrat 1 und die Deckscheibe 4 sind wie in Fig. 1 ausgestaltet. Die thermoplastische Zwischenschicht 5 umfasst eine erste thermoplastische Folie 5.1 und eine zweite thermoplastische Folie 5.2. Die thermoplastischen Folien 5.1 und 5.2 bestehen aus PVB und weisen jeweils eine Dicke von 0,76 mm auf.

Zwischen der ersten thermoplastischen Folie 5.1 und der zweiten thermoplastischen Folie 5.2 ist ein Funktionselement 3 angeordnet. Das Funktionselement 3 ist im Sinne der Erfindung in der thermoplastischen Zwischenschicht 5 angeordnet. Der durch den Kreis gekennzeichnete Bereich um das Funktionselement 3 ist rechts vergrößert dargestellt. Das Funktionselement 3 ist ein PDLC-Funktionselement und umfasst eine funktionelle Schicht 11 zwischen einer ersten Flächenelektrode 9 und einer zweiten Flächenelektrode 10. Die Flächenelektroden 9,10 sind über nicht dargestellte Leiter mit einer externen Spannungsversorgung verbunden. Die funktionelle Schicht 11 enthält Flüssigkristalle, die in ein Polymernetzwerk eingelagert sind. Wird an die Flächenelektroden 9,10 eine Spannung angelegt, so richten sich die Flüssigkristalle entlang einer gemeinsamen Richtung aus und die Transmission von sichtbarem Licht durch die funktionelle Schicht 11 wird erhöht.

Auf der Innenfläche (II) des Substrats 1 ist eine Reflexionsschicht 2 aus Zinnoxid (SnO₂) mit einer Dicke d von etwa 165 nm angeordnet. Der Brechungsindex *n_{R}* des Zinnoxids beträgt etwa 2,00. Das Produkt aus dem Brechungsindex *n_{R}* und der Dicke d der Reflexionsschicht 2 beträgt etwa 330 nm. Durch die Reflexionsschicht 2 wird in dieser Ausgestaltung eine blaue Farbe des in die äußere Umgebung reflektierten Lichtes erreicht.

Fig. 4 zeigt einen Querschnitt durch eine weitere Ausgestaltung der erfindungsgemäßen Verglasung mit schaltbaren optischen Eigenschaften. Auf der Außenfläche (I) des Substrats 1 ist eine Reflexionsschicht 2 angeordnet. Auf der Innenfläche (II) des Substrats 1 ist ein Funktionselement 3 angeordnet. Der durch den Kreis gekennzeichnete Bereich um das Funktionselement 3 ist rechts vergrößert dargestellt.

Die Reflexionsschicht 2 aus Indium-Zinn-Oxid (ITO) weist eine Dicke d von 145 nm angeordnet. Der Brechungsindex *n_{R}* des Indium-Zinn-Oxids beträgt 1,92. Das Produkt aus dem Brechungsindex *n_{R}* und der Dicke d der Reflexionsschicht 2 beträgt etwa 278 nm. Durch die Reflexionsschicht 2 wird in dieser Ausgestaltung eine violette Farbe des in die äußere Umgebung reflektierten Lichtes erreicht.

Das Substrat 1 ist über seine Innenfläche (II) mittels eines umlaufenden Abstandshalter 7 mit einer weiteren Scheibe 6 zu einer Isolierverglasung verbunden. Auf der zum Substrat 1 hingewandten Oberfläche der weiteren Scheibe 6 ist eine Wärmeschutzbeschichtung 8 angeordnet. Wärmeschutzbeschichtungen (auch Low-E-Beschichtungen genannt) sind an sich bekannt und verbessern den thermischen Komfort im Innenraum. Solche Wärmeschutzbeschichtungen umfassen beispielsweise funktionelle Schichten auf Silberbasis, die im Sommer Teile der Sonnenstrahlung, insbesondere im IR-Bereich, reflektieren und im Winter die Aussendung von Wärmestrahlung über die Verglasung vermindern.

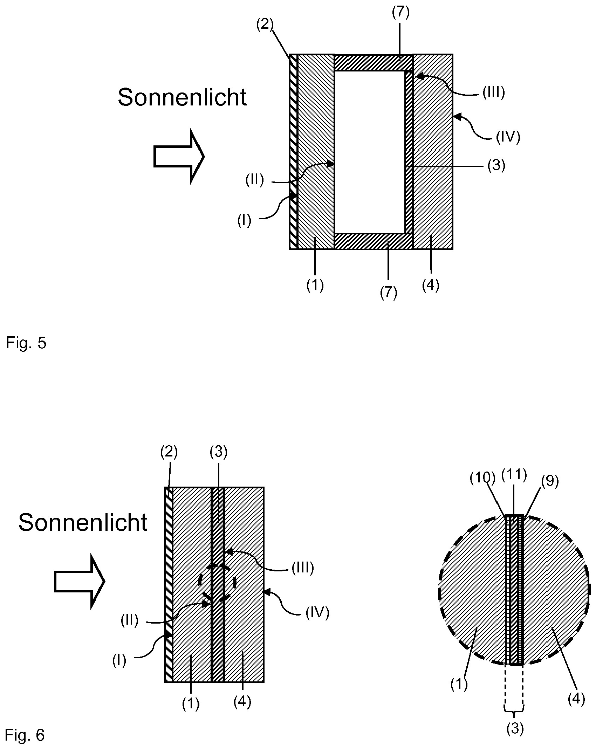

Fig. 5 zeigt einen Querschnitt durch eine weitere Ausgestaltung der erfindungsgemäßen Verglasung mit schaltbaren optischen Eigenschaften. Das Substrat 1 ist über seine Innenfläche (II) mittels eines umlaufenden Abstandshalters 7 mit der Außenfläche (III) einer Deckscheibe 4 verbunden. Das Substrat 1 und die Deckscheibe 4 sind wie in Fig. 1 ausgestaltet.

Auf der Außenfläche (III) der Deckscheibe 4 ist ein thermochromes Funktionselement 3 angeordnet. Auf der Außenfläche (I) des Substrats 1 ist eine Reflexionsschicht 2 angeordnet. Das Funktionselement 3 und die Reflexionsschicht 2 sind wie in Fig. 2 ausgestaltet.

Fig. 6 zeigt einen Querschnitt durch eine weitere Ausgestaltung der erfindungsgemäßen Verglasung mit schaltbaren optischen Eigenschaften. Das Substrat 1 ist über seine Innenfläche (II) mit der Außenfläche (III) einer Deckscheibe 4 verbunden. Zwischen dem Substrat 1 und der Deckscheibe 4 ist ein Funktionselement 3 angeordnet. Das Funktionselement 3 ist auf der Innenfläche (II) des Substrats 1 und der Außenfläche (III) der Deckscheibe 4 angeordnet, so dass das Substrat 1 und die Deckscheibe 4 über das Funktionselement 3 verbunden sind. Der durch den Kreis gekennzeichnete Bereich um das Funktionselement 3 ist rechts vergrößert dargestellt. Das Funktionselement 3 ist ein elektrisch schaltbares Funktionselement und umfasst eine funktionelle Schicht 11 zwischen einer ersten Flächenelektrode 9 und einer zweiten Flächenelektrode 10, wobei die erste Flächenelektrode 9 auf die Außenfläche (III) und die zweite Flächenelektrode auf die Innenfläche (II) aufgebracht sind. Die Flächenelektroden 9,10 sind über nicht dargestellte Leiter mit einer externen Spannungsversorgung verbunden. Auf der Außenfläche (I) des Substrats 1 ist eine Reflexionsschicht 2 angeordnet.

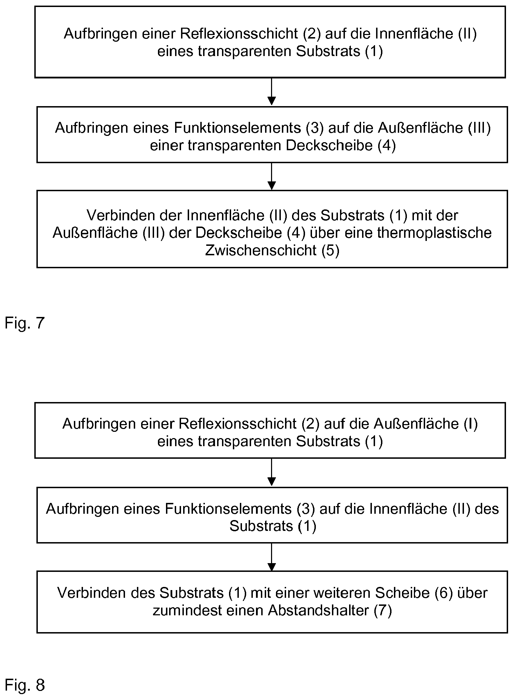

Fig. 7 zeigt ein Ausführungsbeispiel des erfindungsgemäßen Verfahrens zur Herstellung einer Verglasung mit schaltbaren optischen Eigenschaften.

Das Verbinden von Deckscheibe und Substrat kann in einer alternativen Ausführung auch über zumindest einen Abstandshalter erfolgen.

Fig. 8 zeigt ein weiteres Ausführungsbeispiel des erfindungsgemäßen Verfahrens zur Herstellung einer Verglasung mit schaltbaren optischen Eigenschaften

Es war für den Fachmann unerwartet und überraschend, dass durch die erfindungsgemäße Reflexionsschicht, welche einfach und kostengünstig aufzubringen ist, eine effektive Regulierung der außerseitigen Reflexionsfarbe einer Verglasung mit schaltbaren optischen Eigenschaften erreicht werden kann. Die außerseitige Reflexionsfarbe ist dabei unabhängig vom Schaltzustand der Verglasung und vom Betrachtungswinkel und kann durch die Wahl des Materials und der Dicke der Reflexionsschicht frei gewählt werden.

### Bezugszeichenliste:

- (1): transparentes Substrat
- (2): Reflexionsschicht
- (3): schaltbares Funktionselement
- (4): transparente Deckscheibe
- (5): thermoplastische Zwischenschicht
- (5.2): erste thermoplastische Folie
- (5.2): zweite thermoplastische Folie
- (6): weitere Scheibe
- (7): Abstandshalter
- (8): Wärmeschutzbeschichtung
- (9): erste Flächenelektrode des Funktionselements 3
- (10): zweite Flächenelektrode des Funktionselements 3
- (11): funktionelle Schicht des Funktionselements 3
- (12): zweite thermoplastische Zwischenschicht
- (13): lonenspeicherschicht des Funktionselements 3
- (14): elektrolytische Schicht des Funktionselements 3

- I: Außenfläche des transparenten Substrats 1
- II: Innenfläche des transparenten Substrats 1
- III: Außenfläche der Deckscheibe 4
- IV: Innenfläche der Deckscheibe 4

## Patentansprüche

1. Verglasung mit schaltbaren optischen Eigenschaften, mindestens umfassend:
- ein transparentes Substrat (1) mit einer Außenfläche (I) und einer Innenfläche (II),
- eine Reflexionsschicht (2) auf der Außenfläche (I) und / oder auf der Innenfläche (II) und
- ein schaltbares Funktionselement (3) innenraumseitig zur Reflexionsschicht (2) angeordnet,
wobei die Reflexionsschicht (2) ein Material mit einem Brechungsindex *n_{R}* von 1,6 bis 2,55 enthält und wobei das Produkt aus dem Brechungsindex *n_{R}* und der Dicke *d* der Reflexionsschicht (2) von 250 nm bis 960 nm beträgt, und wobei die Reflexionsschicht (2) eine einzelne und homogene Schicht ist.

2. Verglasung nach Anspruch 1, wobei das Substrat (1) über die Innenfläche (I) mittels zumindest einer thermoplastischen Zwischenschicht (5) mit einer transparenten Deckscheibe (4) mit einer Außenfläche (III) und einer Innenfläche (IV) verbunden ist und wobei das Funktionselement (3) auf der Außenfläche (III), auf der Innenfläche (IV) oder in der thermoplastischen Zwischenschicht (5) angeordnet ist.

3. Verglasung nach Anspruch 1, wobei das Substrat (1) über die Innenfläche (I) mittels zumindest eines Abstandshalters (7) mit einer transparenten Deckscheibe (4) mit einer Außenfläche (III) und einer Innenfläche (IV) verbunden ist und wobei das Funktionselement (3) auf der Außenfläche (III) oder auf der Innenfläche (IV) angeordnet ist.

4. Verglasung nach Anspruch 1, wobei die Reflexionsschicht (2) auf der Außenfläche (I) und das Funktionselement (3) auf der Innenfläche (II) angeordnet ist.

5. Verglasung nach einem der Ansprüche 1 bis 4, wobei die Reflexionsschicht (2) zumindest Siliziumnitrid, Zinnoxid, Siliziumoxynitrid, Zinkoxid, Zirkoniumoxid. Aluminiumnitrid, Indium-Zinn-Oxid, Zinn-Zink-Oxid, Titan-Zink-Oxid und / oder Titan-Silizium-Oxid enthält.

6. Verglasung nach einem der Ansprüche 1 bis 5, wobei das Produkt aus dem Brechungsindex *n_{R}* und der Dicke *d* der Reflexionsschicht (2) von 365 nm bis 400 nm, bevorzugt von 375 nm bis 390 nm oder von 730 nm bis 800 nm, bevorzugt von 750 nm bis 780 nm beträgt.

7. Verglasung nach einem der Ansprüche 1 bis 5, wobei das Produkt aus dem Brechungsindex *n_{R}* und der Dicke *d* der Reflexionsschicht (2) von 435 nm bis 480 nm, bevorzugt von 440 nm bis 475 nm oder von 870 nm bis 960 nm, bevorzugt von 880 nm bis 950 nm beträgt.

8. Verglasung nach einem der Ansprüche 1 bis 5, wobei das Produkt aus dem Brechungsindex *n_{R}* und der Dicke *d* der Reflexionsschicht (2) von 305 nm bis 365 nm, bevorzugt von 320 nm bis 345 nm oder von 610 nm bis 730 nm, bevorzugt von 640 nm bis 690 nm beträgt.

9. Verglasung nach einem der Ansprüche 1 bis 5, wobei das Produkt aus dem Brechungsindex *n_{R}* und der Dicke *d* der Reflexionsschicht (2) von 250 nm bis 300 nm, bevorzugt von 270 nm bis 285 nm oder von 500 nm bis 600 nm, bevorzugt von 540 nm bis 570 nm beträgt.

10. Verglasung nach einem der Ansprüche 1 bis 9, wobei das Funktionselement (3) ein elektrochromes, ein PDLC-, ein SPD-, ein thermochromes, ein gasochromes, ein photochromes, ein photoelektrochromes oder ein thermotropes Funktionselement ist.

11. Verglasung nach einem der Ansprüche 1 bis 10, wobei das Substrat (1) nichtvorgespanntes, teilvorgespanntes oder vorgespanntes Glas, bevorzugt Flachglas, Floatglas, Quarzglas, Borosilikatglas, Kalk-Natron-Glas oder klare Kunststoffe, bevorzugt starre klare Kunststoffe, insbesondere Polyethylen, Polypropylen, Polycarbonat, Polymethylmethacrylat, Polystyrol, Polyamid, Polyester, Polyvinylchlorid und / oder Gemische davon enthält, ganz besonders bevorzugt Kalk-Natron-Glas, und bevorzugt eine Dicke von 20 µm bis 10 mm aufweist.

12. Verfahren zur Herstellung einer Verglasung nach einem der Ansprüche 1, 2 oder 5 bis 11, wobei zumindest
- eine Reflexionsschicht (2) auf die Außenfläche (I) oder auf die Innenfläche (II) eines transparenten Substrats (1) aufgebracht wird,
- ein schaltbares Funktionselement (3) auf die Außenfläche (III) oder auf die Innenfläche (IV) einer transparenten Deckscheibe (4) aufgebracht oder in eine thermoplastische Zwischenschicht (5) eingebracht wird und
- das Substrat (1) über die thermoplastische Zwischenschicht (5) mit der Deckscheibe (4) unter Einwirkung von Hitze, Vakuum und / oder Druck verbunden wird.

13. Verfahren zur Herstellung einer Verglasung nach einem der Ansprüche 1, 3 oder 5 bis 11, wobei zumindest
- eine Reflexionsschicht (2) auf die Außenfläche (I) oder auf die Innenfläche (II) eines transparenten Substrats (1) aufgebracht wird,
- ein schaltbares Funktionselement (3) auf die Außenfläche (III) oder auf die Innenfläche (IV) einer transparenten Deckscheibe (4) aufgebracht wird und
- das Substrat (1) über mindestens einen Abstandshalter (7) mit der Deckscheibe (4) verbunden wird.

14. Verfahren zur Herstellung einer Verglasung nach einem der Ansprüche 1 oder 4 bis 11, wobei zumindest
- ein Reflexionsschicht (2) auf die Außenfläche (I) eines transparenten Substrats (1) aufgebracht wird und
- ein schaltbares Funktionselement (3) auf die Innenfläche (II) des Substrats (1) aufgebracht wird.

15. Verwendung einer Reflexionsschicht (2) in einer Verglasung nach einem der Ansprüche 1 bis 11 zur Regulierung der außenseitigen Reflexionsfarbe.

## Claims

1. Glazing having switchable optical properties, comprising at least:
- a transparent substrate (1) having an outer surface (I) and an inner surface (II),
- a reflection layer (2) on the outer surface (I) and / or on the inner surface (II), and
- a switchable functional element (3) arranged on the interior side relative to the reflection layer (2),
wherein the reflection layer (2) contains a material having a refractive index *n_{R}* from 1.6 to 2.55 and wherein the product of the refractive index *n_{R}* and the thickness *d* of the reflection layer (2) is from 250 nm to 960 nm, wherein the reflection layer (2) is a single and homogeneous layer.

2. Glazing according to claim 1, wherein the substrate (1) is bonded to a transparent cover pane (4) having an outer surface (III) and an inner surface (IV) via the inner surface (I) by means of at least one thermoplastic intermediate layer (5) and wherein the functional element (3) is arranged on the outer surface (III), on the inner surface (IV), or in the thermoplastic intermediate layer (5).

3. Glazing according to claim 1, wherein the substrate (1) is bonded to a transparent cover pane (4) having an outer surface (III) and an inner surface (IV) via the inner surface (I) by means of at least one spacer (7) and wherein the functional element (3) is arranged on the outer surface (III) or on the inner surface (IV).

4. Glazing according to claim 1, wherein the reflection layer (2) is arranged on the outer surface (I) and the functional element (3) is arranged on the inner surface (II).

5. Glazing according to one of claims 1 through 4, wherein the reflection layer (2) contains at least silicon nitride, tin oxide, silicon oxynitride, zinc oxide, zirconium oxide, aluminum nitride, indium tin oxide, tin zinc oxide, titanium zinc oxide, and / or titanium silicon oxide.

6. Glazing according to one of claims 1 through 5, wherein the product of the refractive index *n_{R}* and the thickness *d* of the reflection layer (2) is from 365 nm to 400 nm, preferably from 375 nm to 390 nm, or from 730 nm to 800 nm, preferably from 750 nm to 780 nm.

7. Glazing according to one of claims 1 through 5, wherein the product of the refractive index *n_{R}* and the thickness *d* of the reflection layer (2) is from 435 nm to 480 nm, preferably from 440 nm to 475 nm, or from 870 nm to 960 nm, preferably from 880 nm to 950 nm.

8. Glazing according to one of claims 1 through 5, wherein the product of the refractive index *n_{R}* and the thickness *d* of the reflection layer (2) is from 305 nm to 365 nm, preferably from 320 nm to 345 nm, or from 610 nm to 730 nm, preferably from 640 nm to 690 nm.

9. Glazing according to one of claims 1 through 5, wherein the product of the refractive index *n_{R}* and the thickness *d* of the reflection layer (2) is from 250 nm to 300 nm, preferably from 270 nm to 285 nm, or from 500 nm to 600 nm, preferably from 540 nm to 570 nm.

10. Glazing according to one of claims 1 through 9, wherein the functional element (3) is an electrochromic, a PDLC, an SPD, a thermochromic, a gasochromic, a photochromic, a photoelectrochromic, or a thermotropic functional element.

11. Glazing according to one of claims 1 through 10, wherein the substrate (1) contains non-prestressed, partially prestressed, or prestressed glass, preferably flat glass, float glass, quartz glass, borosilicate glass, soda lime glass, or clear plastics, preferably rigid clear plastics, in particular polyethylene, polypropylene, polycarbonate, polymethyl methacrylate, polystyrene, polyamide, polyester, polyvinyl chloride, and / or mixtures thereof, most particularly preferably soda lime glass, and preferably has a thickness from 20 µm to 10 mm.

12. Method for producing a glazing according to one of claims 1, 2, or 5 through 11, wherein at least
- a reflection layer (2) is applied on the outer surface (I) or on the inner surface (II) of a transparent substrate (1),
- a switchable functional element (3) is applied on the outer surface (III) or on the inner surface (IV) of a transparent cover pane (4) or is incorporated into a thermoplastic intermediate layer (5), and
- the substrate (1) is bonded to the cover pane (4) via the thermoplastic intermediate layer (5) under the action of heat, vacuum, and / or pressure.

13. Method for producing a glazing according to one of claims 1, 3, or 5 through 11, wherein at least
- a reflection layer (2) is applied on the outer surface (I) or on the inner surface (II) of a transparent substrate (1),
- a switchable functional element (3) is applied on the outer surface (III) or on the inner surface (IV) of a transparent cover pane (4), and
- the substrate (1) is bonded to the cover pane (4) via at least one spacer (7).

14. Method for producing a glazing according to one of claims 1 or 4 through 11, wherein at least
- a reflection layer (2) is applied on the outer surface (I) of a transparent substrate (1) and
- a switchable functional element (3) is applied on the inner surface (II) of the substrate (1).

15. Use of a reflection layer (2) in a glazing according to one of claims 1 through 11 to control the external reflection color.

## Revendications

1. Vitrage avec des propriétés optiques commutables, comprenant au moins:
- un substrat transparent (1) avec une surface extérieure (I) et une surface intérieure (II),
- une couche réfléchissante (2) sur la surface extérieure (I) et/ou sur la surface intérieure (II) et
- un élément fonctionnel commutable (3) disposé sur la face intérieure de la couche réfléchissante (2)
où la couche réfléchissante (2), contient un matériel avec un indice de réfraction *n_{R}* de 1,6 à 2,55 et où le produit de l'indice de réfraction *n_{R}* et l'épaisseur dde la couche réfléchissante (2) est entre 250 nm à 960 nm, et où la couche de réflexion (2) est une couche unique et homogène.

2. Vitrage selon la revendication 1, où le substrat (1) est connecté avec une plaque de couverture (4) transparente par la surface intérieure (I) en utilisant au moins une couche intermédiaire thermoplastique (5) avec une surface extérieure (III) et une surface intérieure (IV) et où l'élément fonctionnel (3) est disposé sur la surface extérieure (III), sur la surface intérieure (IV) ou dans la couche intermédiaire thermoplastique (5).

3. Vitrage selon la revendication 1, où le substrat (1) est connecté avec une plaque de couverture (4) transparente par la surface intérieure (I) en utilisant au moins un écarteur (7) avec une surface extérieure (III) et une surface intérieure (IV) et où l'élément fonctionnel (3) est disposé sur la surface extérieure (III) ou sur la surface intérieure (IV).

4. Vitrage selon la revendication 1, où la couche réfléchissante (2) est arrangée sur la surface extérieure (I) et l'élément fonctionnel (3) sur la surface intérieure (II).

5. Vitrage selon l'une des revendications 1 à 4, où la couche réfléchissante (2) contient au moins du nitrure de silicium, de l'oxyde d'étain, de l'oxynitrure de silicium, de l'oxyde de zirconium, du nitrure d'aluminium, de l'oxyde d'indium-étain, de l'oxyde d'étain-zinc, de l'oxyde de titane-zinc et / ou de l'oxyde de titane-silicium.

6. Vitrage selon l'une des revendications 1 à 5, où le produit de l'indice de réfraction *n_{R}* et l'épaisseur *d* de la couche réfléchissante (2) est de 365 nm à 400 nm, de préférence de 375 nm à 390 nm ou de 730 nm à 800 nm, de préférence de 750 nm à 780 nm.

7. Vitrage selon l'une des revendications 1 à 5, où le produit de l'indice de réfraction *n_{R}* et l'épaisseur dde la couche réfléchissante (2) est de 435 nm à 480 nm, de préférence de 440 nm à 475 nm ou de 870 nm à 960 nm, de préférence de 880 nm à 950 nm.

8. Vitrage selon l'une des revendications 1 à 5, où le produit de l'indice de réfraction *n_{R}* et l'épaisseur dde la couche réfléchissante (2) est de 305 nm à 365 nm, de préférence de 320 nm à 345 nm ou de 610 nm à 730 nm, de préférence de 640 nm à 690 nm.

9. Vitrage selon une revendications 1 à 5, où le produit de l'indice de réfraction *n_{R}* et l'épaisseur dde la couche réfléchissante (2) est de 250 nm à 300 nm, de préférence de 270 nm à 285 nm ou de 500 nm à 600 nm, de préférence de 540 nm à 570 nm.

10. Vitrage selon l'une des revendications 1 à 9, où l'élément fonctionnel (3) est un l'élément fonctionnel électrochrome, PDLC, SPD, thermochromique, gasochromique, photochromique, photoelectrochromique ou thermotrope.

11. Vitrage préfère selon l'une des revendications 1 à 10, où le substrat (1) contient du verre non trempé, partiellement trempé ou trempé de préférence du verre plat, du verre flotté, du verre de quartz, du verre borosilicate, du verre à chaux sodée ou du plastique transparent, de préférence des plastiques rigides et transparents, en particulier du polyéthylène, du polypropylène, du polycarbonate, du polyméthacrylate de méthyle, du polystyrène, du polyamide, du polyester, du polychlorure de vinyle et/ou des mélanges de ceux-ci, de manière particulièrement préférée du verre à chaux sodée, et de préférence une épaisseur de 20 µm à 10 mm.

12. Procédé de fabrication d'un vitrage selon l'une des revendications 1, 2 ou 5 à 11, où au moins,
- une couche réfléchissante est appliquée (2) sur la surface extérieure (I) ou sur la surface intérieure (II) d'un substrat transparent (1),
- un élément fonctionnel commutable (3) est appliqué sur la surface extérieure (III) ou sur la surface intérieure (IV) d'une plaque de couverture (4) transparente ou inséré dans une couche intermédiaire thermoplastique (5) et
- le substrat (1) est connecté à la plaque de couverture (4) sous l'action de la chaleur, du vide et/ou de la pression sur la couche thermoplastique (5).

13. Procédé de fabrication d'un vitrage selon l'une des revendications 1, 3 ou 5 à 11, où au moins
- une couche réfléchissante (2) est appliquée à la surface extérieure (I) ou à la surface intérieure (II), d'un substrat transparent (1),
- un élément fonctionnel commutable (3) est appliqué à la surface extérieure (III) ou à la surface intérieure (IV), d'une plaque de couverture (4) et
- le substrat (1) est relié à la plaque de couverture (4) par au moins un écarteur (7).

14. Procédé de fabrication d'un vitrage selon l'une des revendications 1 ou 4 à 11, où au moins
- une couche réfléchissante (2) est appliquée à la surface extérieure (I) d'un substrat transparent (1) et
- un élément fonctionnel commutable (3) est appliqué à la surface intérieure (II) d'un substrat transparent (1).

15. Utilisation d'une couche réfléchissante (2) dans un vitrage selon l'une des revendications 1 à 11, pour le réglage de la couleur de réflexion extérieure.
